(19) Europäisches Patentamt
European Patent Office
Office européen des brevets

(11) **EP 4 141 693 A1**

(12) **EUROPEAN PATENT APPLICATION**

(43) Date of publication:
**01.03.2023 Bulletin 2023/09**

(21) Application number: **22175664.6**

(22) Date of filing: **26.05.2022**

(51) International Patent Classification (IPC):
**G06F 16/25** (2019.01)     **G06N 20/00** (2019.01)
**G06N 3/04** (2006.01)

(52) Cooperative Patent Classification (CPC):
**G06F 16/258; G06N 3/045; G06N 20/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.08.2021 US 202163237961 P
30.08.2021 PT 2021117429**

(71) Applicant: **Feedzai - Consultadoria e Inovação
Tecnológica, S.A.**
**3030-199 Coimbra (PT)**

(72) Inventors:
- **PONTES JESUS, SÉRGIO GABRIEL**
  **3030-199 COIMBRA (PT)**
- **RODRIGUES DOS SANTOS MARQUES ALVES,
  DUARTE MIGUEL**
  **3030-199 COIMBRA (PT)**

- **PEREIRA ROSA CORREIA POMBAL, JOSÉ
  MARIA**
  **3030-199 COIMBRA (PT)**
- **FERREIRA DA CRUZ, ANDRÉ MIGUEL**
  **3030-199 COIMBRA (PT)**
- **SOBRAL LEITE VEIGA, JOÃO ANTÓNIO**
  **3030-199 COIMBRA (PT)**
- **SIMÕES BRAVO FERREIRA, JOÃO GUILHERME**
  **3030-199 COIMBRA (PT)**
- **GARCIA BELÉM, CATARINA**
  **3030-199 COIMBRA (PT)**
- **OLIVEIRA PENA SAMPAIO, MARCO**
  **3030-199 COIMBRA (PT)**
- **DOS SANTOS SALEIRO, PEDRO**
  **3030-199 COIMBRA (PT)**
- **SANTOS RODRIGUES BIZARRO, PEDRO
  GUSTAVO**
  **3030-199 COIMBRA (PT)**

(74) Representative: **Patentree
Edificio Net
Rua de Salazares, 842
4149-002 Porto (PT)**

(54) **METHOD AND DEVICE FOR OBTAINING A GENERATED DATASET WITH A PREDETERMINED BIAS FOR EVALUATING ALGORITHMIC FAIRNESS OF A MACHINE LEARNING MODEL**

(57) Computer system and method for obtaining a generated dataset with a predetermined bias, from a real-world tabular dataset, for evaluating algorithmic fairness of a machine learning model, comprising training a Generative Adversarial Network, GAN, model on the real-world dataset for generating a dataset as a anonymized reconstructed dataset of the real-world dataset, and sampling of the trained GAN model to obtain the generated dataset. Introducing the predetermined bias in the generated dataset may comprise appending one or more columns generated to introduce bias into the dataset; selecting one or more columns and sampling the generated dataset according to a predetermined distribution of the selected column or columns for introducing bias into the dataset; or by adapting a value function of the GAN for introducing the bias in the training of the GAN model on the real-world dataset.

Fig. 1

**Description**

**TECHNICAL FIELD**

The present disclosure relates to a method and device for generating anonymized datasets with a predetermined bias, namely, for evaluating fairness and robustness to different bias patterns in data of Machine Learning (ML) models in a computer-executable application, and in particular to a method and device for obtaining a benchmark application relating to the computer-executable application for testing fairness of ML models of the computer-executable application.

**BACKGROUND**

Fairness in Machine learning (ML) has been a vibrant research topic in recent years, with several works laying theoretical groundwork [1], metric trade-offs [2] and incompatibilities [3], or coming forward with new methods for fair ML [4, 5]. Nonetheless, there has not been a major breakthrough in the field and real-world adoption of bias mitigation methods is still scarce.

Evaluation remains an obstacle to progress in fair ML, particularly, because of the 1) lack of consistent, well-established, and systematic evaluation of fairness, and 2) scarcity of realistic, large tabular datasets for algorithmic decision-making.

Inconsistent evaluation practices cast doubt on the utility of novel fair ML methods. The choice of prior art datasets for fairness studies has been usually based on the few datasets that were used on seminal works. However, the choice of tabular datasets depends only on two requirements: a) public availability and b) inclusion of protected attributes (or, interchangeably, sensitive attributes), to calculate fairness metrics. However, common datasets such as COMPAS and UCI Adult are small, representing easy but unrealistic predictive tasks [6].

Fair ML can be highly problem-specific, entailing many decisions, e.g., fairness and performance metrics, group membership, models, thresholds, and, thus, potentially different and incomparable results. Models are evaluated with undisclosed decision thresholds, on different fairness and performance metrics, at times with no consideration for the different types of underlying biases or intervention (i.e. actions derived from model predictions).

Evaluating both fairness and predictive accuracy is usual practice when introducing novel algorithms, methods, or metrics for bias mitigation [4, 7, 8]. For example, Agarwal et al. [8] evaluate their novel approach on four tabular datasets, against unconstrained models and three other bias mitigation methods.].

Secondly, most works define fairness metrics irrespective of the use case and with no considerations for the practical impact to end users, e.g., whether the task is punitive or assistive. Additionally, inconsistency in metrics choice remains a large obstacle to research progress, rendering any comparison between different methods unreliable.

Thirdly, reports of model performance generally refer to a single operating point, i.e., a single threshold which, in many cases, is not disclosed. Despite being simple, this is a crucial aspect to ensuring comparability and reproducibility. In a similar view, many works, including benchmarks [11], often focus their analysis on a narrow subset of bias intervention, such as the pre-processing interventions, thus failing to provide the overall comparison of different intervention types for each specific task.

Most efforts on dataset building concerns Computer Vision tasks [13], e.g., facial analysis or medical diagnosis, or Natural Language Processing ones [14], e.g., co-reference resolution and machine translation, with little to no recent development on algorithmic decision-making tabular tasks. In the presence of inadequate tabular datasets, it is relevant to create a test bed made of diverse, robust, and realistic datasets, reflecting real-world discriminatory patterns.

One potential obstacle to sharing real-world datasets is the privacy and anonymization of data, especially in sensitive areas like healthcare and finance. Removing personal information from data records is a risky and time-consuming task. To circumvent this limitation, one can use generative approaches, for instance, Generative Adversarial Networks (GANs), to create anonymized replicas of real-world datasets. However, GANs are not typically disclosed in the context of bias evaluation.

The evaluation of GANs is done at the level of the generated sample, i.e., the output of the GAN model. This evaluation is done in two different characteristics of the dataset: a) predictive performance on the generated data, and b) statistical similarity to the seed dataset.

During the evaluation of predictive performance, one checks how the original ML performance changes, when part of the original dataset is replaced by its generated counterpart [15].

Another privacy-preserving approach is CTGAN [15]. This method employs a conditional based GAN architecture [16] that generates datasets with continuous, categorical, or binary features. It deals with unbalanced categorical features by oversampling values with low frequencies and handles non-Gaussian continuous features by using a Variational Gaussian Mixtures Model. This architecture can be easily extended for case-specific constraints, such as numerical features with upper and lower bounds.

Despite the large number of existing datasets in the fairness literature, the most popular ones are too small in size, less than 10K rows, and simplistic in nature. As a case in point, over 90% test precision can be achieved for fair models [17] on the UCI Adult dataset [18] with a vanilla LightGBM algorithm [19]. Other datasets such as COMPAS [20], German Credit [18], and Ricci [21] have respectively 6K, 1K, and 118 rows, a manifestly limited size. It is reasonable to believe that methods suited for these small simpler datasets may not be suited for larger, more complex datasets. In addition to dataset size, another requirement for including a dataset as a benchmark is that of the data being in tabular format, and the existence of a protected attribute column.

To go beyond the natural biases that occur in datasets, it is relevant to evaluate models and bias mitigation techniques in predefined types of bias, which are artificially injected in the dataset. This grants fine-grained control over the experiments and increases the overall robustness of a benchmark, where robustness may be defined as the robustness to different bias patterns in data.

There are several definitions of bias in data, but there is still little consensus on how to measure it, or their impact on algorithms' predictive performance and fairness [22].

For example, three different types of bias related to a given protected attribute are: (i) group size disparities [23], (ii) prevalence disparities, and (iii) distinct conditional class separability.

Group size disparity is given by $\exists\, a \in A : P\left[A = a\right] \neq \frac{1}{N}$ , where a represents a single group from a given protected attribute *A,* and *N* the number of possible groups. This results in different frequencies for possible values of the protected attribute.

Prevalence disparity occurs when $P\left[Y\right] \neq P\left[Y\,|\,A\right]$, i.e., the class probability is dependent on the protected group.

Distinct conditional class separability extends the previous definition by including the joint distribution of input features *X* and *Y* label, $P\left[X,\ Y\right] \neq P\left[X,\ Y\,|\,A\right]$. This is achieved by moving the distributions of classes enough so that a linear decision boundary obtains the predefined cumulative value for a negative class (FPR) and for a positive class (TPR).

Nowadays, many large organizations collect sensitive data on their business. These datasets can capture real-world bias patterns, but are usually protected by privacy laws, that prevent their disclosure. However, organizations may benefit from sharing their data with third-party companies, that can bring new insights and techniques. With the generation of privacy-aware synthetic datasets, data can be shared without disclosing any sensitive information.

Current evaluation practices in the fair ML literature vary wildly between different scientific publications. The choice of fairness and performance metric is highly task dependent. For instance, one can trivially achieve high accuracy (or low misclassification rate) on datasets with severe class imbalance (if a class represents 99% of the data, a model can achieve 99% accuracy by always predicting that class). Regarding fairness metrics, one can trivially achieve perfect equal opportunity by predicting all samples as positive, or achieve perfect predictive equality by predicting all samples as negative. As such, in order for metrics to be comparable between different models, it is crucial to set a given threshold budget (e.g., number of allowed positive predictions) or choose a specific point in the ROC curve (e.g., maximum number of false positives, or minimum number of true positives). This evaluation faithfully reflects the constraints of using ML models in the real-world, such as a minimum recall for a cancer detecting medical system, or a maximum false-positive rate for a fraud detection model. Note that this contrasts with the standard procedure of evaluating models on a fixed arbitrary decision threshold, the most common of which arguably being *t* = 0.5, i.e., $\hat{Y}$ = 1 [*f(x)* ≥ 0.5], for a given model *f* on a given data instance *x.*

Each of the benchmark's datasets is associated with a specific real-world scenario, and carries specific performance and fairness metrics drawn thereafter. Fairness metrics can be computed as the widest disparity between the model's performance per group on the relevant class [24]:

$$\frac{\min_{a \in A} P\left[\hat{Y} = 1 | A = a, Y = y\right]}{\max_{a \in A} P\left[\hat{Y} = 1 | A = a, Y = y\right]},$$

$$(1)$$

where A is the set of sensitive attributes.

In assistive settings, a positive prediction is related to a positive outcome for the individual (e.g., funding for their project). As such, fairness is achieved by maximizing Equation 1 for the positive class y = 1 (ratio of true positive rates). This fairness metric is also known as equal opportunity [1]. Conversely, in punitive settings, a positive prediction is related to a negative outcome for the individual (e.g., losing access to their bank account for being flagged as fraudulent). In these cases, fairness is achieved by maximizing Equation 1 for the negative class y = 0 (ratio of false positive rates) [24]. This fairness metric is also known as predictive equality [2], or equal opportunity with reference to y = 0.

One additional consideration affecting the fairness and performance of ML algorithms is the choice of hyperparameters. This has been shown to be an important factor for both fairness and performance, as fairness-blind ML algorithms with the right choice of hyperparameters can even dominate state-of-the-art bias mitigation algorithms [17].

Furthermore, reporting results without hyperparameter optimization can lead to low reproducibility and high metric variance. In order to provide a fair comparison, it was given an equal budget of 50 trials to each ML algorithm, and show results for the best performing fair model of each. According to an embodiment, a model is deemed fair if it achieves at least 80% on the fairness metric. This is motivated by the "80% rule", by which the US Equal Employment Opportunity Commission dictates that the hire rate for some discriminated group must not be under 80% that of another group [9]. If no model was found to be fair for some algorithm, it was signalled that result as such, and instead we show the model found to be the closest to the fairness criterion.

Method evaluation in fair ML is still far from being systematic and robust. Ad-hoc evaluations on toy datasets characterize most work in the field. However, this renders comparison between bias mitigation techniques inconsistent and non-reproducible, providing no intuition of the interventions true impact and discouraging their adoption in practice.

These facts are disclosed in order to illustrate the technical problem addressed by the present disclosure.

## GENERAL DESCRIPTION

It is disclosed a computer system and method for obtaining a generated dataset with a predetermined bias, from a real-world tabular dataset, for evaluating algorithmic fairness of a machine learning model, comprising training a Generative Adversarial Network, GAN, model on the real-world dataset for generating a dataset as a anonymized reconstructed dataset of the real-world dataset, and sampling of the trained GAN model to obtain the generated dataset. Introducing the predetermined bias in the generated dataset may comprise appending one or more columns generated to introduce bias into the dataset; selecting one or more columns and sampling the generated dataset according to a predetermined distribution of the selected column or columns for introducing bias into the dataset; or by adapting a value function of the GAN for introducing the bias in the training of the GAN model on the real-world dataset.

It is disclosed a computer-implemented method for obtaining a generated dataset with a predetermined bias, from a real-world dataset, for evaluating algorithmic fairness of a machine learning model, wherein said datasets are tabular comprising columns and rows of data, each row corresponding to a dataset record and each column corresponding to a dataset attribute, the method comprising:

training a Generative Adversarial Network, GAN, model on the real-world dataset for generating the generated dataset as a anonymized reconstructed dataset of the real-world dataset, and
sampling of the trained GAN model to obtain the generated dataset;
the method comprising introducing the predetermined bias in the generated dataset.

Generating the biased dataset using the trained GAN model may comprise:

appending one or more generated columns to the generated dataset as a dataset attribute or attributes of interest for fairness evaluation, wherein the one or more generated columns are generated to introduce bias into the dataset; randomly sampling the column-appended generated dataset to generate the generated dataset with a predetermined bias.

Generating the biased dataset using the trained GAN model may comprise:

selecting one or more columns from the generated dataset as a dataset attribute or attributes of interest for fairness evaluation;
sampling the generated dataset according to a predetermined distribution of the attribute or attributes of interest for introducing bias, to generate the generated dataset with a predetermined bias.

In an embodiment, a column corresponding to an attribute of interest for fairness evaluation, includes an attribute including two group labels, one for a majority of instances and one for a minority of instances, for testing group size disparity, wherein said column comprises a larger number of records in the majority group than the minority group.

In an embodiment, a column corresponding to an attribute of interest for fairness evaluation, includes an attribute including two group labels, one for a majority of instances and one for a minority of instances, where prevalence with respect to a binary classification task of the majority and prevalence with respect to the same binary classification task of the minority are disparate, for testing prevalence disparity.

In an embodiment, a column corresponding to an attribute of interest, includes an attribute including two group labels, one for a majority of instances and one for a minority of instances, where predictive performance, including true positive rate, with respect to a binary classification task is disparate between majority and minority groups, for testing conditional class separability disparity.

In an embodiment, the conditional class separability disparity is introduced by selecting or adding two reference columns sampled from four multivariate normal distributions, one distribution for each combination of group label and classification task label, where the classification task is linearly separable with adjustable true-positive-rate and false-positive-rate for the majority and minority groups determined by the attribute of interest for fairness evaluation.

Generating the biased dataset using the trained GAN model may comprise training the Generative Adversarial Network, GAN, model on the real-world dataset, for generating the generated dataset with said bias, by adapting a value function of the GAN for introducing the bias in the training of the GAN model.

In an embodiment, the bias is a group size disparity bias, and the adapted value function of the GAN is:

$$V(G, C) = C(x) - C(G(z)) + \sum_{a=1}^{N} |P(G(z)_A = a) - P_a|$$

where G is a GAN Generator, C is a GAN Critic following WGAN's loss, $G(z)$ is a generated sample, $A$ is a categorical feature corresponding to a attribute of interest for fairness evaluation, $a$ is a possible value for the feature $A$, and $P_a$ the probability of value $a$ on feature A.

In an embodiment, the bias is a prevalence disparity bias, and the adapted value function of the GAN is:

$$V(G, C) = C(x) - C(G(z)) + \sum_{a=1}^{N} |P(Y = 1|G(z)_A = a) - P_{y_a=1}|$$

where $G$ is a GAN Generator, $C$ is a GAN Critic following WGAN's loss], $G(z)$ is a generated sample, $A$ is a categorical feature corresponding to a attribute of interest for fairness evaluation, $a$ is a possible value for the feature $A$, $P_a$ the probability of value $a$ on feature A, and $Py_a = 1$ is the desired prevalence for group a.

In an embodiment, the bias is a conditional class separability bias and the GAN comprises an additional output 1-layer neural network [(i.e., a logistic regression or linear classifier], arranged to classify the generated samples with a label as belonging to a class, or a label as not belonging to the class, the method further comprising:

calculating an error probability for each group present in the real-world dataset, each group being defined by a dataset attribute;
obtaining an expected value of the error for each said group present in the real-world dataset;
including the expected value of the error in the value function of the GAN; back-propagating the obtained error through the GAN.

In an embodiment, the value of the error is obtained using a sub-differentiable proxy function, in particular a hinge function.

The method may comprise a preceding step of anonymizing personal information in the real-world dataset according to a method known in the art.

The method may comprise a subsequent step, after sampling of the trained GAN model, of applying one or more data consistency operators to the generated dataset.

The method may comprise a subsequent step, after sampling of the trained GAN model, of discarding repeated sampled records in the generated dataset.

The method may comprise a subsequent step, after sampling of the trained GAN model, of discarding sampled records that are equal to a record in the real-world dataset.

In an embodiment, the GAN is a conditional GAN, CTGAN, in particular a tabular-data modelling conditional GAN. This can be carried out according to the disclosure of [15].

The method may further comprise calculating a fairness metric of the machine learning model, where the fairness metric is defined as being the widest disparity between the machine learning model's performance per group on the relevant class. This can be carried out according to the disclosure of [53].

In an embodiment, the fairness metric is:

$$\frac{\min_{a \in A} P\left[\hat{Y} = 1|A = a, Y = y\right]}{\max_{a \in A} P\left[\hat{Y} = 1|A = a, Y = y\right]},$$

where *A* is a set of attributes to be controlled for fairness, *a* is a possible value for the attribute *A, P* is the probability of positive classification conditioned by the protected attribute value *a* and the label Y.

It is also disclosed a computer-implemented method for evaluating algorithmic fairness of a machine learning model, using a generated dataset obtained from a real-world dataset, wherein said datasets are tabular comprising columns and rows of data, each row corresponding to a dataset record and each column corresponding to a dataset attribute, the method comprising:

generating the generated dataset by the method according to any of the disclosed methods;
testing the machine learning model for algorithmic fairness with the generated dataset.

It is also disclosed a computer-implemented method for evaluating algorithmic fairness of a machine learning model, using a generated dataset obtained from a real-world dataset, wherein said datasets are tabular comprising columns and rows of data, each row corresponding to a dataset record and each column corresponding to a dataset attribute, the method comprising:

generating the generated dataset by the method according to any of the disclosed methods;
replacing a part of the real-world dataset by the generated dataset or concatenating the real-world dataset with the generated dataset, to obtain a mixed dataset;
testing the machine learning model performance with the mixed dataset against a real-world dataset.

In an embodiment, the real-world dataset comprises a training real-world subset and a validation real-world subset set, and the generated dataset comprises a training generated subset and a validation generated subset set.
The method may further comprise, prior to training the GAN model, adding a column, said added column indicating whether a record belongs to a training subset or belongs to a validation subset.
The method may further comprise, prior to training the GAN model, selecting a column from the dataset and aggregating said column according to a temporal sequence, for example, splitting by month.
The method may further comprise obtaining a correlation matrix between pairs of features, for each of the real-world and generated datasets, and calculating a maximum absolute difference for each of the correlation matrices of the real-world and generated datasets.
It is also disclosed a computer program product embodied in a non-transitory computer-readable medium comprising computer program instructions, which when executed by a computer processor, cause the computer processor to carry out any of the disclosed methods.
It is also disclosed a computer system comprising a computer processor and a non-transitory computer-readable memory comprising computer program instructions, which when executed by a computer processor, cause the computer processor to carry out any of disclosed methods.
It is also disclosed a computer system comprising a computer processor configured to carry out any of the disclosed methods.

**BRIEF DESCRIPTION OF THE DRAWINGS**

The following figures provide preferred embodiments for illustrating the disclosure and should not be seen as limiting the scope of invention.

**Figure 1:** Schematic representation of an embodiment of a system architecture for the generator of anonymized and biased datasets.

**Figure 2:** Schematic representation of an embodiment of the combination of dataset parts for complete evaluation.

**Figure 3:** Graphical representation of the distinct conditional class separability for a feature distribution for all instances, on the left, for a majority group, on the middle, and for a minority group, on the right.

**Figure 4:** Schematic representation of the flow of loss function in GAN with Conditional Class Separability.

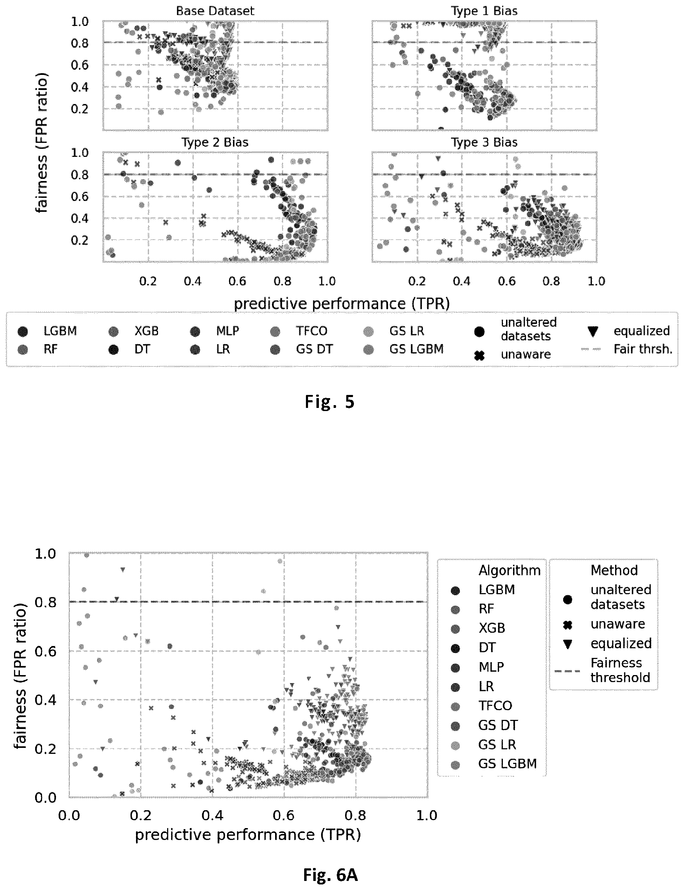

**Figure 5:** Graphical representation of the models' performance and fairness, all fraud datasets for the top 10% predicted positives.

**Figure 6A:** Graphical representation of the fraud type 3 dataset models performance for the top 5% predicted positive.

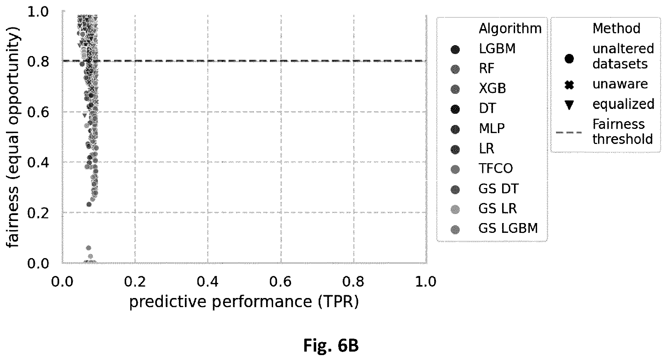

**Figure 6B:** Graphical representation of the donors choose dataset models performance for the top 5% predicted positive.

**DETAILED DESCRIPTION**

The present disclosure relates to a method for generating anonymized and biased datasets, comprising the following steps: feature pre-processing and anonymization, Generative Adversarial Network (GAN) and sampling.

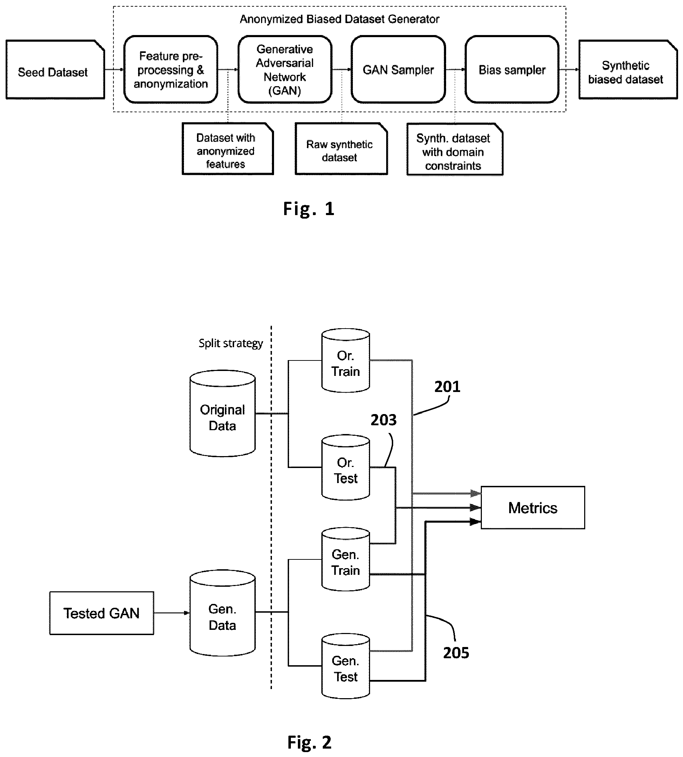

**Figure 1** shows a schematic representation of an embodiment of a system architecture for the generator of anonymized and biased datasets.

In an embodiment, the pre-processing step creates features, such as aggregations, that better describe the records to a machine learning algorithm when compared to the raw data, while removing information that can identify individual records, thus anonymizing personal information present in the records.

In an embodiment, the second step comprises generating a CTGAN model based on a seed dataset, wherein, preferably, the seed dataset for the CTGAN is a concatenation of a training and validation sample, preferably, from a real dataset.

This dataset was further extended with a column, indicating whether an instance belongs to the original training or validation sets. With this technique, the model learns the underlying distribution of the whole data, while simultaneously capturing any differences in the distributions of the training and validation samples.

During this step, it was performed grid-search optimization to choose the best hyperparameters for said GAN. To do so, a classifier was first trained and validated on the original dataset. This result serves as a baseline for next validations. For each GAN, it were generated synthetic train and validation sets with the same sample size. Then, a classifier with the same hyperparameters is trained on the synthetic dataset. Finally, it was chosen the GAN whose classifier achieves the closest performance, when compared to the original classifier, on both the original and synthetic validation datasets. The model was chosen based on the performance on the original validation set. Alternatively, hyperparameter optimization can be carried out using random-search, Bayesian optimization, bandit-based approaches, among others methods.

In the third step, it was used the GAN Sampler, which builds a dataset by randomly sampling the CTGAN model and transforming the synthetic data to ensure several domain constraints, such as value ranges, that are otherwise not captured by the model. These are, for example, imputation of missing values for certain features, or rounding operations to obtain equal significant figures, when compared to the original dataset. Additionally, filters are also applied, to discard certain instances that are deemed invalid. These ensure that there are no repeated instances within the generated dataset or when compared to the original dataset. This further enforces privacy constraints, as no records can be traced back to the original dataset. Other filters guarantee that no instance has invalid values, e.g., synthetic instances with negative values on count-based features, which may only take positive integer values.

Finally, the Bias Sampler creates a specific type of bias in the dataset generated by the GAN Sampler. From this dataset, it was built multiple dataset variations that have different types of bias.

**Figure 2** shows a schematic representation of an embodiment of the combination of dataset parts for complete evaluation, wherein 201 represents generated train evaluation, 203 represents generated validation evaluation, and 205 represents generated train and test evaluation.

In an embodiment, 3 sets of metrics, corresponding to evaluating the performance of the generated training (201) set, the generated validation (203) set, and both sets simultaneously (205). Here, the split strategy is shared in both original and generated data, e.g., splitting by month.

In another embodiment, instead of training a single model with a configuration obtained a priori, several were trained models, with a given hyperparameter sampling strategy, e.g., Random Search, TPE. The results show a tendency for higher degradation of the model performance with a generated test set.

In an embodiment, the second step of evaluation, which is based on the statistical comparison of the generated data and the original data, is divided in two different parts, which are the evaluation of interaction between features, and the evaluation of individual distribution of features. Regarding the former, it is shown that modelling the data as a whole, for example, through Kernel Density Estimation, leads to misleading distribution estimation. Because of this, it was measured the correlation between pairs of features, producing a correlation matrix.

In an embodiment, it is calculated the maximum absolute difference in correlations matrices of the original and generated datasets. In the later, distributions are compared individually through a similarity metric, such as the Jansen-Shannon divergence or Wasserstein metric, or alternatively Kolmogorov-Smirnov test/distance.

An objective of the disclosed sampling method is to obtain one, or more, numerical variables, and underlying distributions, which are capable of producing a linear decision boundary with a given expected functioning point in the ROC space, with user-defined TPR and FPR. Thus, an aspect of the present disclosure is to manipulate the mean of, multivariate, normal distributions, in order to obtain these desired metrics.

For multivariate normal distributions, it is required to use a numeric solver to find the appropriate mean vector as there is no closed form to calculate the volume under the distributions, CDF, whereas in a univariate normal distribution, these could be obtained by solving two CDF equations.

In an embodiment, the process of identifying the mean value is repeated for all the protected groups present in the data. The distributions are then sampled according to both the protected group and label of a given instance in the dataset.

In another embodiment, a transformation of rotation and scaling is applied to the obtained feature vectors, which do not affect the performance of a linear classifier in the features, to generate a sample of values with more desirable properties, e.g., $\mu=0$, $\sigma=1$, which can be useful for using with artificial neuronal networks or logistic regressions, for example.

## Table 1: Conditional Class Separability Algorithm

**Require:** $\text{TPR}_a$ and $\text{FPR}_a$ for $a \in A$, Rotation matrix $\Theta$, Scaling factor $\beta$

1: **for** $a \in A$ **do**
2:     Define matrix $\mu_{a,Y=0}$.
3:     Numerically find matrix $\mu_{a,Y=1}$ which satisfies constraints in FPR, TPR.
4:     Create $\text{MVN}(\mu_{a,Y=0}, \sigma_a)$ and $\text{MVN}(\mu_{a,Y=1}, \sigma_a)$.
5:     Sample both MVN to obtain $x_1, x_2, ...x_n$ for instances of group $a$.
6: Apply rotation matrix $\Theta$ and scaling $\beta$ to feature vector $x_1, x_2, ...x_n$.

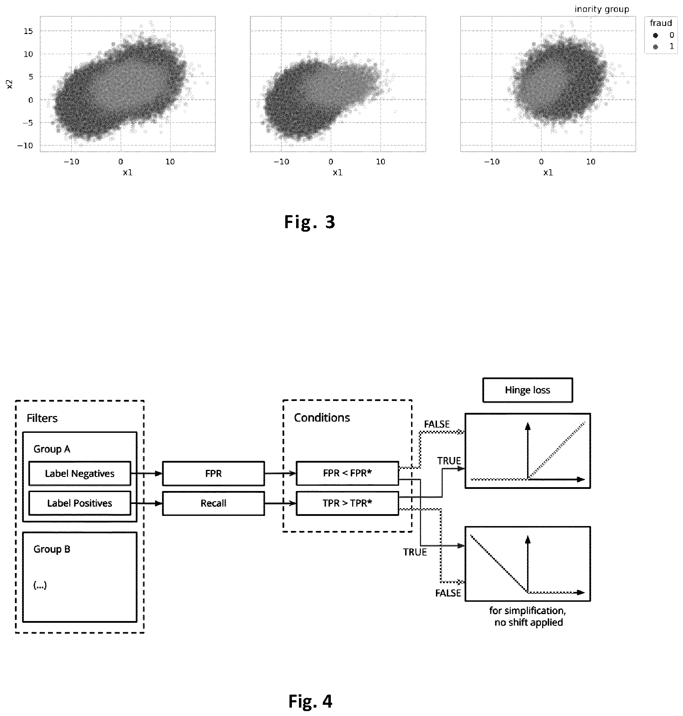

**Figure 3** shows a graphical representation of the distinct conditional class separability for a feature distribution for all instances, on the left, for a majority group, on the middle, and for a minority group, on the right.

The present disclosure also includes adapting a GAN in order to generate already biased datasets, instead of using sampling or a separate column generation process for the purpose.

In an embodiment, to replace the sampling on group size disparity, the value function of the GAN were altered:

$$V(G,C) = C(x) - C(G(z)) + \sum_{a=1}^{N} |P(G(z)_A = a) - P_a| \qquad (2)$$

where $G$ is the Generator, $C$ is the Critic (following the Wasserstein GAN value function definition, WGAN, loss, see https://arxiv.org/abs/1701.07875), $G(z)$ is a generated sample, $A$ is a given categorical feature that one wants to control the value, $a$ is a possible value for the feature, and $P_a$ the probability of value $a$ on feature $A$.

To replace the prevalence disparity, it is added another term to the value function:

$$V(G,C) = C(x) - C(G(z)) + \sum_{a=1}^{N} |P(Y = 1|G(z)_A = a) - P_{y_a=1}| \qquad (3)$$

where $Py_a = 1$ is the desired prevalence for group $a$.

The method for introduction of Conditional Class Separability does not need additional columns for the effect. To achieve this, an additional output layer is added to the GAN architecture, which is a 1-layer neural network, i.e., a logistic regression, fitting and attempting to classify the generated samples by the GAN. Both TPR and FPR are calculated for this classifier for each group defined in the data, and the differences between expected, FPR* and TPR*, and obtained metrics, FPR and TPR, are back-propagated through the generator. Since the metrics of TPR and FPR are not differentiable, these are approximated through the hinge function.

**Figure 4** shows a schematic representation of the flow of loss function in GAN with Conditional Class Separability.

For the prevalence disparity, it is generated datasets where the probability of the label is conditioned by the different groups of the protected attribute, e.g., different fraud rates for age groups.

While the former two properties are achieved by the generator without any significant degradation on the process, due to the higher complexity of the loss function, this last transformation usually brings convergence issues. There is a trade-off associated between better performance of the generator (hence more realistic generated samples) and the penalty of these constraints (samples that follow the desired properties).

In an embodiment, it is also disclosed a benchmark suite, for systematic evaluation of fairness of ML models using real and large tabular datasets. This benchmark suite is composed of both assistive and punitive decision-making tasks, enabling the in-depth study of distinct fairness interventions under several real-world scenarios.

The present disclosure it was tested over 5K models for fairness, including state-of-the-art bias mitigation methods and several ML algorithms for tabular data.

When extending the benchmark suite with performance results for the different datasets, said method further requires reports of evaluation metrics for different models, with different seeds, and different thresholds, thus ensuring a more robust comparison.

In an embodiment, said benchmark comprises two types of interventions: punitive and assistive, represented in two different datasets.

The benchmark suite was kick-started with two datasets: one for an assistive ML task, the Donors Choose dataset (166K rows), and one for a punitive ML task, the Fraud dataset (1M rows).

In an embodiment, regarding the ML algorithms to be part of this initial seed of the said benchmark suite, it was chosen a set of commonly used state-of-the-art ML algorithms, e.g., the Light Gradient Boosting Machine (LightGBM), which typically have better results in tabular data, as well as well-known bias reduction algorithms from the fair ML literature. Moreover, it is disclosed the results for the fairness-blind ML algorithms with simple data pre-processing interventions: omitting the protected attribute from training, also known as unawareness, and equalizing the prevalence across all sub-groups in training. It was tested how these simple interventions fared against complex state-of-the-art algorithms on different tasks.

To go beyond the natural biases that occur in datasets, it is relevant to evaluate models and bias mitigation techniques in predefined types of bias, which are artificially injected in the dataset. This granted fine-grained control over the tests and increased the overall robustness (i.e. robustness to different bias patterns in data) of the said benchmark.

In an embodiment, to introduce bias, it were generated novel features in the feature space, so that the class label $Y$ are easier to separate when conditioned on one of the values of the protected attribute $A$.

Said benchmark was focused on datasets pertaining to real-world decision-making tasks. In order to cover a variety of fairness scenarios, it was included an assistive task, the Donors Choose dataset, and a punitive task, the Fraud dataset. Finally, for the newly introduced Fraud dataset, it was further embed known bias patterns using synthetic protected groups, to surface possible shortcomings of the bias mitigation algorithms being evaluated. For each dataset, it was defined a fairness metric and a predictive performance metric, taking into account the context of the ML task at hand.

The Donors Choose dataset is a publicly available tabular dataset with considerable size, 166K rows, and that is often used for evaluating bias mitigation algorithms [25]. It contains data pertaining to fundraisers for thousands of projects proposed for/by K-12 schools. The objective is identifying projects at risk of being underfunded in order to provide assistive tailored interventions. The records are divided into a train and validation sets, with 99K and 67K instances each. As an assistive task, fairness is achieved if the model's recall is independent of the poverty level of the school each project belongs to. This is also known as equal opportunity [1] for schools with different poverty levels. This fairness criterion is optimized by maximizing the ratio between the group with lowest recall and the group with highest recall). In the dataset, the predictive performance metric is recall. This is an assistive setting with limited budget, and one wants to discover projects that require funding while minimizing the number of projects that receive budget and don't require it.

The Fraud dataset contains anonymized tabular data from a real-world stream of client-bank interactions. This dataset was introduced, together with 3 other variants, intended to test known bias patterns. The dataset contains 1M rows, split into 750K rows for training, and 250K rows for testing. The protected attribute is the client age. Although it is a discrete value, it was binarized in order to compute fairness metrics, by considering a threshold at age 50. The train set has 80% of the records belonging to the younger group, with a fraud rate of 1.5%, while the remaining 20% are in the older group, with a fraud rate of 3%. The validation set has similar split sizes but the fraud rates increase to 2% and 5% for the younger and older groups, respectively.

As a punitive task, fairness is achieved if the model's false-positive rate is independent of the customer's age group. This is also known as predictive equality [2] across age groups. Regarding predictive performance, the metric is recall. It is common practice in the industry to use this metric at a fixed FPR, in order to detect fraudulent transactions, without raising to many false positives.

To further understand the behaviour of algorithms with respect to different bias patterns, three variants of the banking fraud dataset are created. Each variant has a combination of one or more bias types presented in section 3.2.

For the first variant (Type 1), it was appended an additional synthetic column to the data: a protected attribute with a majority (represented by 90% of the instances) and a minority group (group size disparity). The fraud rate of the latter is five times larger than the former, prevalence disparity.

The second variant (Type 2) has the previously introduced protected attribute (group size disparity), but no

**EP 4 141 693 A1**

prevalence disparity. Instead, it features distinct conditional class separability. To achieve this, it was created two new columns $x_1$ and $x_2$, sampled from four multivariate normal distributions - one for each combination of protected attribute and class label. Inside this space, fraudulent observations from the majority group are easier to distinguish from non-fraudulent ones (illustrated in Figure 2). Classifiers are then expected to be less precise for the minority group.

The final variant (Type 3) has distinct conditional class separability relative to the real protected attribute "client_age", as well as prevalence disparity. The goal of this is to aggravate whatever bias is already present in the data, making for a harder fairness challenge.

It was benchmarked a set of commonly used fairness-blind ML algorithms: Logistic Regression, Decision Tree, Random Forest, LightGBM [19], XGBoost [26], and Neural Networks (MLP). In addition, it was evaluated two state-of-the-art bias reduction algorithms with prominent open-source packages: TensorFlow constrained optimization5 (TFCO), a package used to train neural networks with fairness constraints [27]; and the Grid Search method6 (GS) for reducing constrained optimization to cost-sensitive learning put forth by Agarwal et al. [18]. These models were trained on-premise on a cluster with multiple CPUs. The MLP models were trained using GPUs.

It was further attempted to use the Zafar et al. [10] method, but its quadratic runtime proved impractical to use with large datasets. Additionally, the Exponentiated Gradient reduction method [18] was also excluded from the benchmark as it does not allow for setting a given target threshold. A user of this method does not control how many positive or negative predictions the model can make, or which point in the ROC curve the user wants to target, which is a major requirement for real-world ML tasks, namely the tasks for each of the datasets used in the benchmark.

It is presented and discussed the results of the previously described tests. In this evaluation, an 80% fairness threshold was used. That is, algorithms are considered to be fair if they score higher than 80% in the fairness metric.

Globally, it is noticeable that the default implementation of classification algorithms shows general good predictive accuracy but poor fairness. Out of the fairness-blind models, LGBM and XGB score the highest recall. The MLP and RF algorithms achieved comparable, although slightly worse, results. Less complex algorithms, such as Decision Trees or Logistic Regression show sub-par performance in general. The algorithms are not able to consistently satisfy the fairness threshold set at an acceptable global recall. In biased datasets, unfairness is even more evident, and performance increases, which can be explained by the protected attribute's greater predictive power. Indeed, Figure 3 shows that, in these datasets, most points are accumulated in the lower right quadrant of their plots (high performance, low fairness).

In this method, it was removed the protected attribute column from the dataset before training the fairness-blind algorithms. In the Base Fraud, Type 2 and Type 3 bias datasets, unawareness leads to an increase in fairness, although the algorithms still don't meet desired thresholds. When unaware algorithms satisfy the fairness threshold, the TPR measurement is relatively low (<20%), which constitutes a steep fairness-performance trade-off. The small fairness increase is not surprising, since removing the protected attribute before training does not account for any other correlated features. The algorithms will still have access to said features, leaving their predictions subject to the remaining latent bias. Conclusions are similar for the Donors Choose dataset, but not for Fraud Type 1 Bias. In the latter, the protected attribute is synthetic, and correlated only with the class label, not the features (in expected value). Thus, removing it allows algorithms to keep the performance high and become fair.

Equalizing prevalences in the training set leads to good results in the Fraud, Fraud Type 1 Bias, and Donors Choose datasets. By undersampling the majority group's negative observations, this method removes correlations between the protected attribute and the class label. It also addresses the problem of correlations with the features, as some of this information is eliminated when dropping observations. Some drop in performance was expected, as the dataset is truncated, but results show that it was not large. In Fraud Type 2, prevalences are already balanced, so applying the method doesn't result in any significant change. In Fraud Type 3, some Decision Tree models were close to the fairness threshold, but none surpassed it. These datasets show that simple pre-processing methods are not the best solution to address complex fairness challenges.

The TFCO algorithm achieved the best results for the Type 2 bias dataset. It outperformed the algorithms for all thresholds, while achieving high fairness scores. For the remaining datasets, although this method achieved high fairness scores, its performance degraded. Throughout all of these tests, the TFCO models seemed very unstable, with their results scattered across the entire space, which is not desirable. The Grid Search method achieved the best score in the Type 3 dataset, with the Logistic Regression variation outperforming all other fair algorithms in the task. At a 10% threshold, two models of this kind were the only ones to achieve fairness and score >60% TPR (Figure 3. For the Type 2 bias, its performance was comparable to the TFCO method (the best for the dataset), but the best performing methods did not comply with the fairness threshold. In the remaining datasets, it achieved results that were usually on par with the best performing methods (pre-processing). Considering all the experiences, this method seemed more stable than the previous one while, on average, achieving very good results. In general, in processing seems to be a fine solution for the datasets with more complex bias patterns. However, they were quite volatile in both fairness and performance, especially TFCO. Figure 3 illustrates this, with TFCO points lying all over the plots.

The present document discloses a method to create anonymized tabular datasets and a benchmark for fair ML on tabular data. This benchmark is kickstarted with two datasets, Donors Choose and Banking Fraud dataset, each representing a different type of intervention: assistive and punitive, respectively. Said method is based on GANs when applied to datasets that contain sensitive data.

It is also disclosed means to inject predefined types of bias in the original datasets, to obtain more robust and general measurements.

It was evaluated two commonly used pre-processing methods, Unawareness and Equalized Prevalence, and two state-of-the-art in-processing methods, TFCO and Grid-Search. As a baseline, it was used the default implementation of classification algorithms. This benchmark is highly adapted to tabular data and aims to provide control over the existent biases in the data, while also maintaining a realistic scenario.

Fairness-blind methods show good performance but poor fairness results. Pre-processing methods are fairer for simpler types of bias. However, for more complex bias patterns, they are either not applicable, equalized prevalences, or do not address latent correlations between features and protected attribute, unawareness. In these cases, in-processing methods achieve much better results. Increasing the threshold of predicted positives leads to general increases in both performance and fairness.

EXAMPLE

In an additional embodiment, the disclosed method is used for generating banking fraud datasets. A GAN is used to create an anonymized replica of a real-world financial data stream. Moreover, to test for different types of bias, 3 variations of this dataset are generated, each one encoding specific bias patterns, such as group-wise distinct class conditional distributions.

In an embodiment, said method comprises two types of interventions: punitive and assistive, represented in two different datasets. The first is a banking fraud dataset, representing a punitive intervention, denying access to a bank account, and an anonymized replica of a real-world financial fraud detection dataset using a GAN. The second dataset is the publicly available Donors Choose dataset, with an assistive setting, providing monetary assistance to projects that risk getting underfunded. With these datasets, it is possible to assess the different fairness interventions with realistic sample sizes, 1M and 166K instances, respectively, comprising complex real-world distributions and different types of biases.

Using the previously mentioned datasets, it were evaluated over 5K models in datasets reflecting distinct real-world case scenarios. Considering a standardized set of fairness metrics, it was run different hyperparameter search for 8 different ML algorithms, including both commonly used algorithms such as logistic regression, LightGBM, and neural networks, and also models in fair ML. Initial results show that 1) baselines tend to exhibit better predictive performance but appalling fairness, 2) simpler patterns can be efficiently mitigated with pre-processing interventions with minimal degradation in predictive performance, and, finally, 3) in-processing interventions yield promising results in the presence of more complex bias patterns but their results are also more volatile, sometimes failing to be on par with the baselines.

Table 2: Fraud base test results

| Threshold Method | 5% | | 10% | | 20% | |
|---|---|---|---|---|---|---|
| | (Global TPR | Pred. Equality | Global TPR | Pred. Equality | Global TPR | Pred. Equality |
| **LGBM** | 13.67% | 83.22% | 18.02% | 92.97% | 26.85% | 95.99% |
| **LGBM + UN** | 15.67% | 70.63% | 19.83% | 85.75% | 28.46% | 92.46% |
| **LGBM + EP** | **42.09%** | **97.47%** | **57.67%** | **98.13%** | **74.71%** | **88.6%** |
| **RF** | 38.42% | 37.35% | 52.81% | 41.7% | 67.06% | 48.7% |
| **RF + UN** | 40.89% | 43.55% | 54.29% | 48.97% | 69.9% | 57.26% |
| **RF+EP** | 39.96% | 73.69% | 55.57% | 75.15% | 69.18% | 76.41% |
| **XGB** | 26.82% | 46.54% | 39.59% | 53.45% | 55.5% | 60.9% |
| **XGB + UN** | 25.62% | 64.42% | 37.62% | 67.63% | 53.92% | 74.12% |
| **XGB + EP** | 42.06% | 80.56% | 57.57% | 93.92% | 74.55% | 83.54% |
| **DT** | 29.32% | 64.97% | 27.08% | 77.17% | 45.95% | 84.53% |
| **DT + UN** | 19.12% | 68.68% | 27.58% | 81.77% | 46.54% | 80.47% |
| **DT + EP** | 32.27% | 80.77% | 46.05% | 80.31% | 63.37% | 80.61% |
| **MLP** | 31.42% | 46.41% | 43.9% | 54.22% | 59.88% | 62.8% |
| **MLP + UN** | 28.72% | 54.02% | 41.07% | 61.13% | 56.76% | 69.15% |
| **MLP + EP** | 39.38% | 83.55% | 53.1% | 81.49% | 72.04% | 82.17% |

(continued)

| Threshold Method | 5% | | 10% | | 20% | |
|---|---|---|---|---|---|---|
| | (Global TPR | Pred. Equality | Global TPR | Pred. Equality | Global TPR | Pred. Equality |
| LR | 4.94% | 99.04% | 9.87% | 98.32% | 51.79% | 86.99% |
| LR + UN | 4.94% | 99.04% | 9.87% | 98.32% | 51.79% | 86.99% |
| LR + EP | 4.94% | 99.04% | 9.87% | 98.32% | 67.09% | 84.83% |
| TFCO | 27.59% | 88.93% | 40.8% | 93.72% | 57.8% | 98.38% |
| GridSearch DT | 29.15% | 94.24% | 40.98% | 82.94% | 63.91% | 80.83% |
| GridSearch LR | 34.88% | 87.09% | 49.24% | 95.16% | 67.76% | 85.48% |
| GridSearch LGBM | 40.55% | 97.68% | 56.28% | 96.47% | 73.53% | 91.55% |

Table 3: Fraud base best TPR

| Threshold Method | 5% | | 10% | | 20% | |
|---|---|---|---|---|---|---|
| | TPR | Pred. Equality | TPR | Pred. Equality | TPR | Pred. Equality |
| LGBM | 43.81% | - | 59.51% | - | - | - |
| XGB | - | - | - | - | 76.27% | - |

Table 4: Fraud Type 1 test results

| Threshold Method | 5% | | 10% | | 20% | |
|---|---|---|---|---|---|---|
| | Global TPR | Pred. Equality | Global TPR | Pred. Equality | Global TPR | Pred. Equality |
| LGBM | 17.73% | 50.96% | 21.85% | 72.46% | 30.3% | 85.46% |
| LGBM + UN | 43.82% | 99.63% | **59.59%** | **97.17%** | **76.07%** | **98.75%** |
| LGBM + EP | **43.96%** | **95.8%** | 59.43% | 95.54% | 76.07% | 98.39% |
| RF | 45.01% | 16.84% | 50.28% | 27.57% | 66.43% | 35.42% |
| RF + UN | 42.03% | 98.33% | 57.33% | 98.32% | 74.32% | 99.24% |
| RF + EP | 41.99% | 96.65% | 57.2% | 96.55% | 74.41% | 97.62% |
| XGB | 29.15% | 38.28% | 41.18% | 45.91% | 57.18% | 55.49% |
| XGB + UN | 43.65% | 99.86% | 59.39% | 97.81% | 76.27% | 99.67% |
| XGB + EP | 43.55% | 96.21% | 58.97% | 98.43% | 75.77% | 98.01% |
| DT | 22.95% | 45.1% | 27.05% | 67.03% | 50.83% | 88.32% |
| DT + UN | 34.5% | 98.11% | 47.16% | 100.0% | 64.61% | 98.79% |
| DT + EP | 33.86% | 99.2% | 48.15% | 99.78% | 65.21% | 99.24% |
| MLP | 33.38% | 39.76% | 45.63% | 51.98% | 60.78% | 67.24% |
| MLP + UN | 42.46% | 99.24% | 57.83% | 98.76% | 75.25% | 99.1 % |
| MLP + EP | 41.97% | 90.45% | 57.24% | 89.12% | 74.64% | 90.49% |
| LR | 4.94% | 96.98% | 9.87% | 95.28% | 19.52% | 98.29% |
| LR + UN | 37.0% | 97.9% | 51.78% | 99.18% | 69.61% | 98.48% |
| LR + EP | 36.95% | 97.87% | 52.19% | 97.61% | 69.81% | 97.14% |
| TFCO | 4.97% | 85.39% | 10.87% | 84.62% | 21.88% | 85.73% |
| GridSearch DT | 32.61% | 97.13% | 47.62% | 99.36% | 64.24% | 98.38% |
| GridSearch LR | 37.06% | 87.42% | 52.39% | 87.62% | 69.29% | 89.91% |
| GridSearch LGBM | 42.63% | 86.04% | 57.88% | 90.85% | 75.42% | 91.94% |

Table 5: Fraud Type 1 best TPR

| Threshold Method | 5% | | 10% | | 20% | |
|---|---|---|---|---|---|---|
| | TPR | Pred. Equality | TPR | Pred. Equality | TPR | Pred. Equality |
| LGBM | 48.12% | - | 63.47% | - | - | - |
| XGB | - | - | - | - | 78.34% | - |

Table 6: Fraud Type 2 test results

| Threshold Method | 5% | | 10% | | 20% | |
|---|---|---|---|---|---|---|
| | Global TPR | Pred. Equality | Global TPR | Pred. Equality | Global TPR | Pred. Equality |
| LGBM | 29.83% | 80.32% | 33.28% | 90.2% | 85.92% | 91.87% |
| LGBM + UN | 5.08% | 79.97% | 15.19% | 89.15% | 24.31% | 95.79% |
| RF | 85.22% | 42.89% | 84.62% | 40.06% | 91.09% | 57.06% |
| RF + UN | 63.88% | 5.84% | 81.64% | 8.46% | 94.52% | 14.71% |
| XGB | 84.9% | 35.89% | 92.08% | 37.11% | 96.74% | 42.18% |
| XGB + UN | 61.18% | 10.09% | 73.84% | 13.76% | 86.55% | 22.94% |
| DT | 66.94% | 62.01% | 74.95% | 92.91% | 85.93% | 96.43% |
| DT + UN | 42.14% | 19.29% | 44.84% | 41.45% | 50.94% | 64.99% |
| MLP | 83.88% | 49.73% | 86.83% | 41.95% | 92.54% | 49.16% |
| MLP + UN | 71.68% | 6.58% | 78.57% | 9.42% | 89.93% | 18.81% |
| LR | 78.71% | 37.71% | 85.15% | 51.17% | 88.87% | 64.09% |
| LR + UN | 58.23% | 3.41% | 77.78% | 7.84% | 91.01% | 17.57% |
| TFCO | **79.8%** | **91.25%** | **91.43%** | **91.84%** | **96.46%** | **80.96%** |
| GridSearch DT | 78.78% | 94.31% | 81.89% | 72.95% | 93.3% | 84.14% |
| GridSearch LR | 77.73% | 80.91% | 84.77% | 91.41% | 88.68% | 98.34% |
| GridSearch LGBM | 78.34% | 77.59% | 90.32% | 78.94% | 94.92% | 62.17% |

Table 7: Fraud Type 2 best TPR

| Threshold Method | 5% | | 10% | | 20% | |
|---|---|---|---|---|---|---|
| | TPR | Pred. Equality | TPR | Pred. Equality | TPR | Pred. Equality |
| LGBM | - | - | - | - | 98.02% | - |
| XGB | 87.8% | - | 94.53% | - | - | - |

Table 8: Fraud Type 3 test results

| Threshold Method | 5% | | 10% | | 20% | |
|---|---|---|---|---|---|---|
| | GLobal TPR | Pred. Equality | Global TPR | Pred. Equality | Global TPR | Pred. Equality |
| LGBM | 28.13% | 61.81% | 31.66% | 80.82% | 39.05% | 90.53% |
| LGBM + UN | 22.9% | 36.34% | 26.91% | 59.83% | 34.79% | 78.02% |
| LGBM + EP | 14.98% | 93.0% | 29.43% | 93.4% | 58.25% | 94.74% |
| RF | 79.01% | 21.01% | 67.53% | 20.89% | 83.38% | 29.24% |
| RF + UN | 47.44% | 8.37% | 64.58% | 13.07% | 88.36% | 16.8% |
| RF + EP | 75.73% | 63.52% | 87.2% | 42.05% | 88.8% | 35.12% |
| XGB | 69.94% | 21.13% | 81.75% | 24.94% | 90.23% | 32.55% |
| XGB + UN | 50.08% | 13.02% | 66.18% | 18.39% | 81.18% | 28.42% |
| XGB + EP | 79.4% | 52.01% | 80.16% | 44.52% | 88.45% | 51.26% |

(continued)

| Threshold Method | 5% | | 10% | | 20% | |
|---|---|---|---|---|---|---|
| | GLobal TPR | Pred. Equality | Global TPR | Pred. Equality | Global TPR | Pred. Equality |
| DT | 58.21% | 39.6% | 60.21% | 67.18% | 64.72% | 83.48% |
| DT + UN | 34.77% | 26.74% | 37.91% | 51.67% | 44.56% | 72.63% |
| DT + EP | 62.29% | 45.7% | 63.93% | 71.78% | 67.82% | 85.93% |
| MLP | 71.36% | 37.6% | 81.72% | 47.6% | 89.62% | 56.59% |
| MLP + UN | 65.98% | 14.5% | 71.49% | 20.61% | 84.79% | 29.63% |
| MLP + EP | 72.56% | 49.38% | 85.39% | 50.53% | 92.87% | 59.1 % |
| LR | 4.94% | 99.04% | 9.87% | 98.32% | 19.52% | 99.57% |
| LR + UN | 4.94% | 99.04% | 9.87% | 98.32% | 19.52% | 99.57% |
| LR + EP | 13.36% | 80.94% | 9.87% | 98.32% | 51.79% | 86.99% |
| TFCO | 4.94% | 99.04% | 9.87% | 98.32% | 19.52% | 99.57% |
| GridSearch DT | 65.26% | 65.48% | 67.36% | 57.3% | 70.88% | 77.7% |
| GridSearch LR | **58.91%** | **96.61%** | **65.09%** | **87.13%** | **72.95%** | **96.46%** |
| GridSearch LGBM | 74.69% | 77.42% | 85.9% | 67.15% | 92.53% | 66.18% |

Table 9: Fraud Type 3 best TPR

| Threshold Method | 5% | | 10% | | 20% | |
|---|---|---|---|---|---|---|
| | TPR | Pred. Equality | TPR | Pred. Equality | TPR | Pred. Equality |
| LGBM | 83.85% | - | 92.94% | - | - | - |
| XGB | - | - | - | - | 97.54% | - |

Table 10: Donors Choose test results

| Threshold Method | 5% | | 10% | | 20% | |
|---|---|---|---|---|---|---|
| | Global TPR | Eq. Opportunity | Global TPR | Eq. Opportunity | Global TPR | Eq. Opportunity |
| LGBM | 9.11% | 80.45% | 16.99% | 87.11% | 31.09% | 88.13% |
| LGBM + UN | 9.31% | 83.56% | 17.24% | 80.26% | 31.32% | 80.47% |
| LGBM + EP | **9.43%** | **99.75%** | 17.28% | 90.0% | 31.51% | 89.64% |
| RF | 8.61% | 52.45% | 17.36% | 55.54% | 32.09% | 63.42% |
| RF + UN | 8.64% | 70.28% | 16.5% | 72.95% | 31.37% | 77.01% |
| RF + EP | 9.29% | 80.58% | 17.71% | 83.28% | 32.13% | 86.8% |
| XGB | 8.18% | 81.55% | 15.89% | 81.43% | 29.7% | 83.5% |
| XGB + UN | 9.29% | 81.5% | 17.31% | 80.9% | 32.35% | 80.89% |
| XGB + EP | 9.37% | 98.06% | **17.85%** | **91.52%** | **32.55%** | **98.06%** |
| DT | 7.78% | 87.63% | 14.72% | 87.57% | 29.0% | 87.34% |
| DT + UN | 7.93% | 93.77% | 15.29% | 85.05% | 29.04% | 80.82% |
| DT + EP | 8.21% | 89.85% | 15.46% | 85.49% | 29.36% | 86.3% |
| MLP | 5.96% | 94.53% | 11.45% | 90.52% | 21.47% | 92.81% |
| MLP + UN | 5.96% | 83.84% | 11.45% | 90.52% | 21.47% | 88.08% |
| MLP + EP | 5.94% | 84.47% | 11.45% | 90.52% | 22.31% | 89.78% |
| LR | 5.94% | 84.6% | 11.44% | 90.59% | 20.45% | 90.63% |
| LR + UN | 5.94% | 84.6% | 11.44% | 90.59% | 20.45% | 90.63% |
| LR + EP | 5.94% | 84.6% | 11.44% | 90.59% | 20.45% | 90.63% |
| TFCO | 5.94% | 84.6% | 11.44% | 90.59% | 20.74% | 86.47% |
| GridSearch DT | 6.55% | 73.39% | 13.97% | 83.48% | 25.16% | 95.27% |

(continued)

| Threshold Method | 5% | | 10% | | 20% | |
|---|---|---|---|---|---|---|
| | Global TPR | Eq. Opportunity | Global TPR | Eq. Opportunity | Global TPR | Eq. Opportunity |
| **GridSearch LR** | 6.05% | 82.26% | 11.47% | 90.46% | 20.46% | 90.76% |
| **GridSearch LGBM** | 9.16% | 71.13% | 13.42% | 83.21% | 26.75% | 85.47% |

Table 11: Donors Choose best TPR

| Threshold Method | 5% | | 10% | | 20% | |
|---|---|---|---|---|---|---|
| | TPR | Eq. Opportunity | TPR | Eq. Opportunity | TPR | Pred. Eq. Opportunity |
| **RF + EQ** | 9.47% | - | - | - | - | - |
| **XGB + EQ** | - | - | 17.85% | - | 32.55% | - |

The disclosed benchmark suite aims to bridge the gap between fairness evaluation in the literature and that of real-world ML projects.

In order to mimic real-world ML model deployment scenarios, it was used datasets that are large enough to train state-of-the-art neural network-based models and that encode diverse types of bias inducing patterns.

One of the advantages of this disclosure are evaluating ML fairness under different biased patterns in the data, and understanding which types of data bias a given Fair ML (or fairness blind) algorithm is capable of tackling.

Flow diagrams of particular embodiments of the presently disclosed methods are depicted in figures. The flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the systems described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

References

[1] Moritz Hardt, Eric Price, Eric Price, and Nati Srebro. Equality of opportunity in supervised learning. In D. Lee, M. Sugiyama, U. Luxburg, I. Guyon, and R. Garnett, editors, Advances in Neural Information Processing Systems, volume 29. Curran Associates, Inc., 2016.
[2] Aditya Krishna Menon and Robert C Williamson. The Cost of Fairness in Binary Classification. In Sorelle A. Friedler and Christo Wilson, editors, Proc. of the 1st Conf. on Fairness, Accountability and Transparency, volume 81, pages 107-118. PMLR, 2018.

[3] Geoff Pleiss, Manish Raghavan, Felix Wu, Jon M. Kleinberg, and Kilian Q. Weinberger. On fairness and calibration. CoRR, abs/1709.02012, 2017.

[4] Muhammad Bilal Zafar, Isabel Valera, Manuel Gomez Rogriguez, and Krishna P. Gummadi. Fairness Constraints: Mechanisms for Fair Classification. In Aarti Singh and Jerry Zhu, editors, 20th AISTATS, volume 54 of PMLR, pages 962-970, Fort Lauderdale, FL, USA, 20-22 Apr 2017. PMLR.

[5] Andrew Cotter, Heinrich Jiang, and Karthik Sridharan. Two-Player Games for Efficient Non-Convex Constrained Optimization. Proc. of the 30th Int. Conf. on Algorithmic Learning Theory, 98:300-332, apr 2018.

[6] Michelle Bao, Angela Zhou, Samantha A Zottola, Brian Brubach, Sarah Desmarais, Aaron Seth Horowitz, Kristian Lum, and Suresh Venkatasubramanian. It's COMPASlicated: The messy relationship between RAI datasets and algorithmic fairness benchmarks. In Thirty-fifth Conference on Neural Information Processing Systems Datasets and Benchmarks Track (Round 1), 2021.

[7] Michele Donini, Luca Oneto, Shai Ben-David, John Shawe-Taylor, and Massimiliano Pontil. Empirical risk minimization under fairness constraints. In Proceedings of the 32nd International Conference on Neural Information Processing Systems, NIPS'18, page 2796-2806, Red Hook, NY, USA, 2018. Curran Associates Inc.

[8] Alekh Agarwal, Alina Beygelzimer, Miroslav Dudík, John Langford, and Hanna Wallach. A reductions approach to fair classification. In International Conference on Machine Learning, pages 60-69. PMLR, 2018.

[9] Paul Meier, Jerome Sacks, and Sandy L. Zabell. What happened in hazelwood: Statistics, employment discrimination, and the 80% rule. American Bar Foundation Research Journal, 9(1):139-186, 1984.

[10] R. K. E. Bellamy, K. Dey, M. Hind, S. C. Hoffman, S. Houde, K. Kannan, P. Lohia, J. Martino, S. Mehta, A. Mojsilovic, S. Nagar, K. Natesan Ramamurthy, J. Richards, D. Saha, P. Sattigeri, M. Singh, K. R. Varshney, and Y. Zhang. Ai fairness 360: An extensible toolkit for detecting and mitigating algorithmic bias. IBM Journal of Research and Development, 63(4/5):4:1-4:15, 2019.

[11] Sorelle A. Friedler, Carlos Scheidegger, Suresh Venkatasubramanian, Sonam Choudhary, Evan P. Hamilton, and Derek Roth. A comparative study of fairness-enhancing interventions in machine learning. In Proceedings of the Conference on Fairness, Accountability, and Transparency, FAT* '19, page 329-338, New York, NY, USA, 2019. Association for Computing Machinery.

[12] Frances Ding, Moritz Hardt, John Miller, and Ludwig Schmidt. Retiring adult: New datasets for fair machine learning, 2021.

[13] Michele Merler, Nalini Ratha, Rogerio S Feris, and John R Smith. Diversity in faces. arXiv preprint arXiv:1901.10436, 2019.

[14] Gabriel Stanovsky, Noah A. Smith, and Luke Zettlemoyer. Evaluating gender bias in machine translation. In Proceedings of the 57th Annual Meeting of the Association for Computational Linguistics, pages 1679-1684, Florence, Italy, July 2019. Association for Computational Linguistics.

[15] Lei Xu, Maria Skoularidou, Alfredo Cuesta-Infante, and Kalyan Veeramachaneni. Modeling tabular data using conditional GAN. CoRR, abs/1907.00503, 2019.

[16] Mehdi Mirza and Simon Osindero. Conditional generative adversarial nets. CoRR, abs/1411.1784, 2014.

[17] Andre F. Cruz, Pedro Saleiro, Catarina Belém, Carlos Soares, and Pedro Bizarro. Promoting fairness through hyperparameter optimization, 2021.

[18] Dheeru Dua and Casey Graff. UCI Machine Learning Repository, 2017.

[19] Guolin Ke, Qi Meng, Thomas Finley, Taifeng Wang, Wei Chen, Weidong Ma, Qiwei Ye, and Tie-Yan Liu. Lightgbm: A highly efficient gradient boosting decision tree. In I. Guyon, U. V. Luxburg, S. Bengio, H. Wallach, R. Fergus, S. Vishwanathan, and R. Garnett, editors, NIPS, pages 3146-3154. Curran Associates, Inc., 2017.

[20] Julia Angwin, Jeff Larson, Lauren Kirchner, and Surya Mattu. Machine bias: There's software used across the country to predict future criminals and it's biased against blacks. https://www.propublica.org/article/machine-bias-risk-assessments-in-criminal-sentencing, May 2016. Accessed: 2020-01-09.

[21] Ricci v. destefano, 2009.

[22] Ninareh Mehrabi, Fred Morstatter, Nripsuta Saxena, Kristina Lerman, and Aram Galstyan. A survey on bias and fairness in machine learning, 2019.

[23] William Blanzeisky and Pádraig Cunningham. Algorithmic factors influencing bias in machine learning. CoRR, abs/2104.14014, 2021.

[24] Pedro Saleiro, Benedict Kuester, Abby Stevens, Ari Anisfeld, Loren Hinkson, Jesse London, and Rayid Ghani. Aequitas: A bias and fairness audit toolkit. arXiv preprint arXiv:1811.05577, 2018.

[25] Pedro Saleiro, Kit T. Rodolfa, and Rayid Ghani. Dealing with Bias and Fairness in Data Science Systems: A Practical Hands-on Tutorial, page 3513-3514. Association for Computing Machinery, New York, NY, USA, 2020.

[26] Tianqi Chen and Carlos Guestrin. Xgboost: A scalable tree boosting system. In Proceedings of the 22nd ACM SIGKDD international conference on knowledge discovery and data mining, pages 785-794, 2016.

[27] Harikrishna Narasimhan, Andrew Cotter, and Maya Gupta. Optimizing generalized rate metrics with three players. In H. Wallach, H. Larochelle, A. Beygelzimer, F. d'Alché-Buc, E. Fox, and R. Garnett, editors, Advances in Neural Information Processing Systems, volume 32. Curran Associates, Inc., 2019.

**Claims**

1. A computer-implemented method for obtaining a generated dataset with a predetermined bias, from a real-world dataset, for evaluating algorithmic fairness of a machine learning model, wherein said datasets are tabular comprising columns and rows of data, each row corresponding to a dataset record and each column corresponding to a dataset attribute, the method comprising:

    training a Generative Adversarial Network, GAN, model on the real-world dataset for generating the generated dataset as a anonymized reconstructed dataset of the real-world dataset, and
    sampling of the trained GAN model to obtain the generated dataset;
    the method comprising introducing the predetermined bias in the generated dataset.

2. The computer-implemented method according to claim 1, wherein generating the biased dataset using the trained GAN model comprises:

    appending one or more generated columns to the generated dataset as a dataset attribute or attributes of interest for fairness evaluation, wherein the one or more generated columns are generated to introduce bias into the dataset;
    randomly sampling the column-appended generated dataset to generate the generated dataset with a predetermined bias.

3. The computer-implemented method according to claim 1, wherein generating the biased dataset using the trained GAN model comprises:

    selecting one or more columns from the generated dataset as a dataset attribute or attributes of interest for fairness evaluation;
    sampling the generated dataset according to a predetermined distribution of the attribute or attributes of interest for introducing bias, to generate the generated dataset with a predetermined bias.

4. The computer-implemented method according to claim 2 or 3, wherein a column corresponding to an attribute of interest for fairness evaluation, includes an attribute including two group labels, one for a majority of instances and one for a minority of instances, for testing group size disparity, wherein said column comprises a larger number of records in the majority group than the minority group.

5. The computer-implemented method according to claim 2 or 3, wherein a column corresponding to an attribute of interest for fairness evaluation, includes an attribute including two group labels, one for a majority of instances and one for a minority of instances, where prevalence with respect to a binary classification task of the majority and prevalence with respect to the same binary classification task of the minority are disparate, for testing prevalence disparity.

6. The computer-implemented method according to claim 2 or 3, wherein a column corresponding to an attribute of interest, includes an attribute including two group labels, one for a majority of instances and one for a minority of instances, where predictive performance, including true positive rate, with respect to a binary classification task is disparate between majority and minority groups, for testing conditional class separability disparity.

7. The computer-implemented method according to previous claim, wherein the conditional class separability disparity is introduced by selecting or adding two reference columns sampled from four multivariate normal distributions, one distribution for each combination of group label and classification task label, where the classification task is linearly separable with adjustable true-positive-rate and false-positive-rate for the majority and minority groups determined by the attribute of interest for fairness evaluation.

8. The computer-implemented method according to claim 1, comprising training the Generative Adversarial Network, GAN, model on the real-world dataset, for generating the generated dataset with said bias, by adapting a value function of the GAN for introducing the bias in the training of the GAN model.

9. The computer-implemented method according to claim 8, wherein the bias is a group size disparity bias, and the adapted value function of the GAN is:

$$V(G,C) = C(x) - C(G(z)) + \sum_{a=1}^{N} |P(G(z)_A = a) - P_a|$$

where $G$ is a GAN Generator, $C$ is a GAN Critic following WGAN's loss, $G(z)$ is a generated sample, $A$ is a categorical feature corresponding to a attribute of interest for fairness evaluation, $a$ is a possible value for the feature $A$, and $P_a$ the probability of value $a$ on feature A.

10. The computer-implemented method according to claim 8, wherein the bias is a prevalence disparity bias, and the adapted value function of the GAN is:

$$V(G,C) = C(x) - C(G(z)) + \sum_{a=1}^{N} |P(Y = 1|G(z)_A = a) - P_{y_a=1}|$$

where $G$ is a GAN Generator, $C$ is a GAN Critic following WGAN's loss], $G(z)$ is a generated sample, $A$ is a categorical feature corresponding to a attribute of interest for fairness evaluation, $a$ is a possible value for the feature $A$, $P_a$ the probability of value $a$ on feature A, and $Py_a = 1$ is the desired prevalence for group a.

11. The computer-implemented method according to claim 8, wherein the bias is a conditional class separability bias and the GAN comprises an additional output 1-layer neural network, arranged to classify the generated samples with a label as belonging to a class, or a label as not belonging to the class, the method further comprising:

calculating an error probability for each group present in the real-world dataset, each group being defined by a dataset attribute;
obtaining an expected value of the error for each said group present in the real-world dataset;
including the expected value of the error in the value function of the GAN;
back-propagating the obtained error through the GAN.

12. The computer-implemented method according to the preceding claim, wherein the value of the error is obtained using a sub-differentiable proxy function, in particular a hinge function.

13. The computer-implemented method according to any of the previous claims, wherein the GAN is a conditional GAN, CTGAN, in particular a tabular-data modelling conditional GAN.

14. A computer-implemented method for evaluating algorithmic fairness of a machine learning model, using a generated dataset obtained from a real-world dataset, wherein said datasets are tabular comprising columns and rows of data, each row corresponding to a dataset record and each column corresponding to a dataset attribute, the method comprising:

generating the generated dataset by the method according to any of the claims 1-13;
testing the machine learning model for algorithmic fairness using the generated dataset.

15. A computer program product embodied in a non-transitory computer-readable medium comprising computer program instructions, which when executed by a computer processor, cause the computer processor to carry out the method of any of the claims 1-14.

16. A computer system comprising a computer processor, configured to carry out the method of any of the claims 1-14.

**Fig. 1**

**Fig. 2**

**Fig. 3**

**Fig. 4**

Fig. 5

Fig. 6A

**Fig. 6B**

Europäisches
Patentamt

European
Patent Office

Office européen
des brevets

# EUROPEAN SEARCH REPORT

Application Number

EP 22 17 5664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JU FAN ET AL: "Relational Data Synthesis using Generative Adversarial Networks: A Design Space Exploration", ARXIV.ORG, CORNELL UNIVERSITY LIBRARY, 201 OLIN LIBRARY CORNELL UNIVERSITY ITHACA, NY 14853, 28 August 2020 (2020-08-28), XP081750021, * page 2, right-hand column, paragraph 3 – page 4, right-hand column, paragraph 3; figures 2,3 * * page 7, left-hand column, paragraph 6 * | 1-16 | INV. G06F16/25 G06N20/00 G06N3/04 |
| X | NOSEONG PARK ET AL: "Data Synthesis based on Generative Adversarial Networks", ARXIV.ORG, CORNELL UNIVERSITY LIBRARY, 201 OLIN LIBRARY CORNELL UNIVERSITY ITHACA, NY 14853, 9 June 2018 (2018-06-09), XP081242026, DOI: 10.14778/3231751.3231757 * page 4, left-hand column, paragraph 3 – page 7, left-hand column, paragraph 3; figures 1,2 * * page 8, right-hand column, paragraph 5 * | 1-16 | |
| X | ADITYA KUNAR: "Effective and Privacy preserving Tabular Data Synthesizing", ARXIV.ORG, CORNELL UNIVERSITY LIBRARY, 201 OLIN LIBRARY CORNELL UNIVERSITY ITHACA, NY 14853, 11 August 2021 (2021-08-11), XP091036932, * page 16, paragraph 2-3 * * page 23, paragraph 1 – page 26, last paragraph; figure 4.1 * | 1-16 | |

TECHNICAL FIELDS
SEARCHED (IPC)

G06N
G06F

The present search report has been drawn up for all claims

| Place of search | Date of completion of the search | Examiner |
|---|---|---|
| Munich | 7 December 2022 | Wohner, Wolfgang |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Equality of opportunity in supervised learning. **MORITZ HARDT ; ERIC PRICE ; ERIC PRICE ; NATI SREBRO.** Advances in Neural Information Processing Systems. Curran Associates, Inc, 2016, vol. 29
- The Cost of Fairness in Binary Classification. **ADITYA KRISHNA MENON ; ROBERT C WILLIAMSON.** Proc. of the 1st Conf. on Fairness, Accountability and Transparency. PMLR, 2018, vol. 81, 107-118
- **GEOFF PLEISS ; MANISH RAGHAVAN ; FELIX WU ; JON M. KLEINBERG ; KILIAN Q. WEINBERGER.** On fairness and calibration. *CoRR,* 2017
- Fairness Constraints: Mechanisms for Fair Classification. **MUHAMMAD BILAL ZAFAR ; ISABEL VALERA ; MANUEL GOMEZ ROGRIGUEZ ; KRISHNA P. GUMMADI.** 20th AISTATS. 20 April 2017, vol. 54, 962-970
- **ANDREW COTTER ; HEINRICH JIANG ; KARTHIK SRIDHARAN.** Two-Player Games for Efficient Non-Convex Constrained Optimization. *Proc. of the 30th Int. Conf. on Algorithmic Learning Theory,* April 2018, vol. 98, 300-332
- **MICHELLE BAO ; ANGELA ZHOU ; SAMANTHA A ZOTTOLA ; BRIAN BRUBACH ; SARAH DESMARAIS ; AARON SETH HOROWITZ ; KRISTIAN LUM ; SURESH VENKATASUBRAMANIAN.** It's COMPASlicated: The messy relationship between RAI datasets and algorithmic fairness benchmarks. *Thirty-fifth Conference on Neural Information Processing Systems Datasets and Benchmarks Track (Round 1),* 2021
- Empirical risk minimization under fairness constraints. **MICHELE DONINI ; LUCA ONETO ; SHAI BEN-DAVID ; JOHN SHAWE-TAYLOR ; MASSIMILIANO PONTIL.** Proceedings of the 32nd International Conference on Neural Information Processing Systems, NIPS'18. Curran Associates Inc, 2018, 2796-2806
- **ALEKH AGARWAL ; ALINA BEYGELZIMER ; MIROSLAV DUDÍK ; JOHN LANGFORD ; AND HANNA WALLACH.** A reductions approach to fair classification. *International Conference on Machine Learning,* 2018, 60-69
- **PAUL MEIER ; JEROME SACKS ; SANDY L. ZABELL.** What happened in hazelwood: Statistics, employment discrimination, and the 80% rule. *American Bar Foundation Research Journal,* 1984, vol. 9 (1), 139-186
- **R. K. E. BELLAMY ; K. DEY ; M. HIND ; S. C. HOFFMAN ; S. HOUDE ; K. KANNAN ; P. LOHIA ; J. MARTINO ; S. MEHTA ; A. MOJSILOVIC.** Ai fairness 360: An extensible toolkit for detecting and mitigating algorithmic bias. *IBM Journal of Research and Development,* 2019, vol. 63 (4-5), 4-1, 4-15
- A comparative study of fairness-enhancing interventions in machine learning. **SORELLE A. FRIEDLER ; CARLOS SCHEIDEGGER ; SURESH VENKATASUBRAMANIAN ; SONAM CHOUDHARY ; EVAN P. HAMILTON ; DEREK ROTH.** Proceedings of the Conference on Fairness, Accountability, and Transparency, FAT∗ '19. Association for Computing Machinery, 2019, 329-338
- **FRANCES DING ; MORITZ HARDT ; JOHN MILLER ; LUDWIG SCHMIDT.** *Retiring adult: New datasets for fair machine learning,* 2021
- **MICHELE MERLER ; NALINI RATHA ; ROGERIO S FERIS ; JOHN R SMITH.** Diversity in faces. *arXiv:1901.10436,* 2019
- Evaluating gender bias in machine translation. **GABRIEL STANOVSKY ; NOAH A. SMITH ; LUKE ZETTLEMOYER.** Proceedings of the 57th Annual Meeting of the Association for Computational Linguistics. Association for Computational Linguistics, July 2019, 1679-1684
- **LEI XU ; MARIA SKOULARIDOU ; ALFREDO CUESTA-INFANTE ; KALYAN VEERAMACHANENI.** Modeling tabular data using conditional GAN. *CoRR,* 2019
- **MEHDI MIRZA ; SIMON OSINDERO.** Conditional generative adversarial nets. *CoRR,* 2014
- **ANDRE F. CRUZ ; PEDRO SALEIRO ; CATARINA BELÉM ; CARLOS SOARES ; PEDRO BIZARRO.** *Promoting fairness through hyperparameter optimization,* 2021
- **DHEERU DUA ; CASEY GRAFF.** *UCI Machine Learning Repository,* 2017
- Lightgbm: A highly efficient gradient boosting decision tree. **GUOLIN KE ; QI MENG ; THOMAS FINLEY ; TAIFENG WANG ; WEI CHEN ; WEIDONG MA ; QIWEI YE ; TIE-YAN LIU.** NIPS. Curran Associates, Inc, 2017, 3146-3154

- **JULIA ANGWIN ; JEFF LARSON ; LAUREN KIRCHNER ; SURYA MATTU.** *Machine bias: There's software used across the country to predict future criminals and it's biased against blacks,* May 2016, https://www.propublica.org/article/machine-bias-risk-assessments-in-criminal-sentencing
- **NINAREH MEHRABI ; FRED MORSTATTER ; NRIPSUTA SAXENA ; KRISTINA LERMAN ; ARAM GALSTYAN.** *A survey on bias and fairness in machine learning,* 2019
- **WILLIAM BLANZEISKY ; PÁDRAIG CUNNINGHAM.** Algorithmic factors influencing bias in machine learning. *CoRR,* 2021
- **PEDRO SALEIRO ; BENEDICT KUESTER ; ABBY STEVENS ; ARI ANISFELD ; LOREN HINKSON ; JESSE LONDON ; RAYID GHANI.** Aequitas: A bias and fairness audit toolkit. *arXiv:1811.05577,* 2018
- **PEDRO SALEIRO ; KIT T. RODOLFA ; RAYID GHANI.** Dealing with Bias and Fairness in Data Science Systems: A Practical Hands-on Tutorial. Association for Computing Machinery, 2020, 3513-3514
- **TIANQI CHEN ; CARLOS GUESTRIN.** Xgboost: A scalable tree boosting system. *Proceedings of the 22nd ACM SIGKDD international conference on knowledge discovery and data mining,* 2016, 785-794
- Optimizing generalized rate metrics with three players. **HARIKRISHNA NARASIMHAN ; ANDREW COTTER ; MAYA GUPTA.** Advances in Neural Information Processing Systems. Curran Associates, Inc, 2019, vol. 32